# EUROPÄISCHE PATENTSCHRIFT

(11) **EP 2 107 865 B1**
(45) Veröffentlichungstag und Bekanntmachung des Hinweises auf die Patenterteilung: **26.07.2017**
(21) Anmeldenummer: 07818773.9
(22) Anmeldetag: 08.10.2007
(51) Int. Cl.: A01C 23/00

(54) **FAHRZEUG ZUR AUSBRINGUNG VON GÜLLE**
VEHICLE FOR DEPLOYING LIQUID MANURE
VÉHICULE POUR L'ÉPANDAGE DE LISIER

(30) Priorität: 11.10.2006 DE 202006015589 U
(43) Veröffentlichungstag der Anmeldung: 14.10.2009
(73) Patentinhaber: Zunhammer, Sebastian, 83301 Traunreut (DE)
(72) Erfinder: Zunhammer, Sebastian, 83301 Traunreut (DE)
(74) Vertreter: Heilein, Ernst - Peter
(86) Internationale Anmeldenummer: PCT/EP2007/008698
(87) Internationale Veröffentlichungsnummer: WO 2008/043502

(56) Entgegenhaltungen:
- EP-A- 0 846 408
- DE-A1- 10 318 942
- DE-A1-102004 010 217

## Beschreibung

Die vorliegende Erfindung bezieht sich auf Fahrzeuge zur Ausbringung von Gülle gemäß den Oberbegriffen der Ansprüche 1 bis 3 sowie auf ein Verfahren zum Umrühren von Gülle in solchen Güllefahrzeugen nach dem Oberbegriff von Anspruch 12.

Güllefahrzeuge sind hinlänglich bekannt. So ist aus der DE 10 195 20 950 Cl ein Güllefahrzeug bekannt, bei dem Gülle über eine Schleppschlauch-Verteilervorrichtung bodennah ausgebracht wird. Dort wird auch bereits ein Hinweis darauf gegeben, dass die Agrartechnik im Allgemeinen auch die Aufgabe hat, die Gülleausbringung umweltgerecht zu ermöglichen. Dazu sind vielfältige Lösungsvorschläge gemacht worden, auf die hier nicht näher eingegangen werden muss, da sie Lösungen in die unterschiedlichsten Richtungen vorschlagen.

In der so genannten "Düngeverordnung" sind beispielsweise Vorschriften darüber enthalten, in welcher Inhaltsstoffkonzentration die jeweilige Gülle auf die Felder ausgebracht werden darf. Beispielsweise wird dort festgelegt, wie viel Kilogramm (kg) Stickstoff (N) pro Hektar (ha) und Jahr auf den Boden ausgebracht werden darf. Stickstoff wird im Folgenden nur als Beispiel angeführt, wobei auch noch von Bedeutung ist, dass selbst Stickstoff in Gülle selten in reiner Form, vielmehr meistens in verschiedenen chemischen Verbindungen, so zum Beispiel als Ammonium-Stickstoff-Verbindung vorkommt. Aber auch die Grenzwerte anderer Inhaltsstoffe sind dort angegeben. Um diese Verordnung auch nur annähernd erfüllen zu können, müssen die einzelnen in Frage kommenden Inhaltsstoffe der Gülle dem Anwender bekannt sein. Kennt der Anwender die Anteile der verschiedenen Inhaltsstoffe, so kann er durch die Steuerung der Ausbringmenge pro Flächeneinheit die Nähr- oder Inhaltsstoffkonzentration näherungsweise beeinflussen.

Um aber die Inhaltsstoffe ermitteln zu können, ist es besser, die in Frage kommende Gülle zu analysieren, als die Inhaltsstoffe anhand von Faustzahlen zu schätzen. Voraussetzung für aussagefähige Ergebnisse ist, dass eine repräsentative Mischprobe untersucht wird. Dazu muss der Inhalt des Güllevorratsbehälters homogenisiert also beispielsweise gemischt werden. Da Gülle ein Mehrnährstoffdünger ist, bedeutet das, dass sich die Aufwandmenge an dem Nährstoff orientiert, dessen Bedarf zuerst abgedeckt ist.

Diese Erkenntnisse lassen eine Optimierung der Gülleausbringung zumindest theoretisch zu. In der Praxis sind jedoch erhebliche Probleme aufgrund verschiedener Störfaktoren zu berücksichtigen, die teilweise mit der herkömmlichen Technik nicht gelöst werden können. So muss der Anwender mit sehr unterschiedlichen, Tierart bedingten Gülleformen arbeiten (Schweinegülle, Rindergülle, Hühnergülle) um nur die groben Unterschiede aufzuzählen. Lohnunternehmer, die von verschiedenen landwirtschaftlichen Betrieben Gülle aufnehmen und ausfahren, können in der Praxis nicht mit einer einigermaßen korrekten Gülleanalyse aufwarten. Ferner gibt es Gemeinschaftsfässer, bei deren Füllung auch keine analytisch homogene Gülle angenommen werden kann. Die Inhaltsstoffe von Gülle aus Biogas-Anlagen sind in der Regel ebenso undefiniert. In einem Güllevorratsbehälter gibt es Sinkschichten unterschiedlicher Dichte und so genannte Schwimmdecken. Ferner muss damit gerechnet werden, dass bei einem vollen Güllevorratsbehälter (Güllesilo) der Trockenmasseanteil beim Beginn der Leerung anders ist, als zum Ende der Leerung. Daraus folgert, dass in der Praxis die tatsächlich auf dem Boden ausgebrachte Inhaltsstoffmenge nur grob geschätzt bis unbekannt ist, obwohl die Verteilung mit einer Abweichung von 5-10% per cbm erfolgt.

In der DE 101 42 865 A1 ist zu dieser Problematik ein Verfahren beschrieben, bei dem Funktionseinheiten (z.B. Sensoren) zur Feststellung der Bodenwerte großflächig im Boden der Nutzfläche verteilt sind (dort Spalte 4, Zeilen 40 bis 42), ebenso großflächig auf dem Boden der Nutzfläche sind Vorrichtungen zur Tröpfchenberegnung oder Schlauchbewässerung verteilt (dort Spalte 6, Zeilen 42 bis 46). Bei derartigen stationären Systemen ist ein hoher Investitionsaufwand erforderlich, um eine größere Nutzfläche mit einer Vielzahl von Sensoren zu versehen und eine entsprechend große Anzahl von Verteilerleitungen mit Ausbringelementen (Verschlauchung und Düsen) zur großflächigen Verteilung zu installieren. Wenn Verkehrswege die Nutzfläche durchkreuzen ist eine Verschlauchung praktisch nicht realisierbar. Die in dieser Druckschrift erwähnten Datenübertragungsbausteine sind ebenfalls sehr kostenintensiv in der Anschaffung und im Betrieb, ferner müssen aufwändige Redundanz-Maßnahmen vorgesehen sein, um die Übertragung der Mess- und Steuerdaten störunanfällig zu machen. Schließlich ist das Ergebnis der Gülleanalyse sehr abhängig von der Art der Probenentnahme, denn es ist nicht unerheblich, ob beispielsweise Schweinegülle, oder Rindergülle oder eine Mischgülle verarbeitet werden soll. Die Lagerung der Gülle im Vorratsbehälter ist ebenso zu berücksichtigen (Schwimmdecke oder Ablagerungen der Feststoffpartikel am Boden des Vorratsbehälters). Die Aufbereitung der Gülle gemäß diesem Stand der Technik muss diese Faktoren alle berücksichtigen und die auszubringende Gülle ist entsprechend anzupassen bzw. aufzubereiten, z. B. durch Zugabe von Wasser, d. h. durch Mischen mit Frischwasser (dort Spalte 6, Zeilen 34 ff). Dort ist auch die Lehre zu entnehmen, dass die so aufbereitete Gülle erneut einer Analyse durch weitere Sensoren unterzogen werden muss (Spalte 5, Zeilen 36 bis 40). Die Ausbringung soll dann favorisiert über bekannte Tröpfchenberegnung oder Schlauchbewässerung erfolgen. Aus der Beschreibung wird ohne Weiteres deutlich, dass der apparative, der logistische und der Aufwand an technisch anspruchsvoller Datenverarbeitung und Datenübertragungstechnik enorm hoch ist, abgesehen von der Notwendigkeit, ein Analyselabor einzurichten und zu betreiben.

In der WO 00/64242 A1 ist ein Sensor zur spektralanalytischen Untersuchung von Flüssigkeiten bekannt. Dort wird beispielsweise Milch mit einem derartigen Sensor untersucht.

Aus der DE 103 18 924 A1 ist ein Verfahren zur Ausbringung von Gülle bekannt, bei dem ein Güllesensor in Echtzeit die Inhaltsstoffe der auszubringenden Gülle ermittelt und mit vorgegeben Inhaltsstoffen vergleicht. Die auszubringende Güllemenge pro Flächeneinheit errechnet sich dabei abhängig von diesem Vergleichsergebnis. Bei diesem Verfahren findet die Analyse der Gülle während der Ausbringung statt, woraus sich ergibt, dass die Bauelemente wie Sensor und Verteileinrichtung sehr großen Belastungen während der Ausbringungs-Fahrt ausgesetzt sind. Die in Frage kommenden Bauelemente müssen in Echtzeit arbeiten, was nur durch kostspielige Komponenten realisiert werden kann. An deren mechanische Belastbarkeit werden wegen der bei der Ausbringung möglicher Weise auftretenden Probleme wie Schwingungen und Rütteleffekte hohe Anforderungen gestellt. Außerdem können bei Verstopfungen am Verteiler Druckprobleme auftreten, beispielsweise durch Pulsation, am Sensor, die die Messungen beeinflussen könnten.

Der vorliegenden Erfindung liegt die Aufgabe zu Grunde, Güllefahrzeuge zu schaffen, mit denen eine bessere Berücksichtigung der vom Gesetzgeber geforderten Bestimmungen möglich ist. Mit den Güllefahrzeugen soll eine effiziente Analyse der Gülle sowie eine Optimierung der Gülledüngung möglich sein, wobei eine möglichst störungsarme Ausbringung angestrebt ist.

Diese Aufgabe wird mit Güllefahrzeugen gelöst, welche die Merkmale der Ansprüche 1, 2, 3 aufweisen. Durch die Merkmale der abhängigen Ansprüche wird ein erfindungsgemäßes Güllefahrzeug noch vorteilhaft ausgestaltet.

Besonders vorteilhaft ist ein Güllefahrzeug mit einem Vorratsbehälter und einer Verteilervorrichtung, die mit dem Vorratsbehälter mittels eines Leitungssystem verbunden ist, wobei das Güllefahrzeug über wenigstens einen Sensor zum Messen von Inhaltsstoffen der auszubringenden Gülle (G) und über eine Auswertevorrichtung verfügt, welche Steuerdaten erzeugt, die durch den Vergleich der vom Sensor gemessenen Inhaltsstoff-Ist-Daten der Gülle mit vorgebbaren Inhaltsstoff-Daten berechnet werden. Das erfindungsgemäße Güllefahrzeug zeichnet sich zunächst dadurch aus, dass die Verteilervorrichtung von einer einstellbaren Vorrichtung auf Grund der Steuerdaten so angesteuert wird, dass die pro Flächeneinheit auszubringende Menge der Gülle (G) - bezogen auf ihre Inhaltsstoffe - entsprechend den Steuerdaten reguliert wird.

Besonders vorteilhaft ist dabei ein Güllefahrzeug, wenn der Sensor im Befüllungsbereich des Vorratsbehälters angeordnet ist.

Eine weitere besonders vorteilhafte Bauform eines Güllefahrzeugs ist dann gegeben, wenn der Sensor in einem die Gülle (G) umrührenden Leitungssystem zwischen dem Befüllungsbereich und der Verteilervorrichtung angeordnet ist.

Darüber hinaus ist eine Bauform von Güllefahrzeugen besonders vorteilhaft, bei der ein Sensor im Vorratsbehälter angeordnet ist.

Ferner verfügt ein Güllefahrzeug vorteilhafter Weise über ein Leitungssystem, in dem eine drehzahlgeregelte Pumpe angeordnet ist.

Darüber hinaus ist ein Güllefahrzeug vorteilhaft, wenn die einstellbare Vorrichtung von einem Dreiwegeventil gebildet ist, welches in dem Leitungssystem angeordnet ist.

Ein Güllefahrzeug ist besonders vorteilhaft, wenn die Verteilervorrichtung als Schleppschlauch-Verteiler, Grubber oder als Gülleinjektor ausgebildet ist.

Günstig ist auch ein Güllefahrzeug wenn es als so genannter Selbstfahrer ausgebildet ist.

Aber auch Güllefahrzeuge, die als Anhänger ausgebildet sind, haben Vorteile.

Besonders vorteilhaft ist ein Güllefahrzeug, wenn der Sensor als spektralanalytisch arbeitender optischer Sensor ausgebildet ist, und/oder
wenn der Sensor über eine optische Datenleitung mit der Auswertevorrichtung verbunden ist.

Darüber hinaus kann vorteilhaft sein, wenn im Leitungssystem ein Durchfluss-Mengenmesser angeordnet ist.

Schließlich ist im Zusammenhang mit der vorliegenden Erfindung ein Verfahren zum Umrühren von Gülle in einem Güllefahrzeug nach Anspruch 3 oder 4-11 wenn abhängig von Anspruch 3 vorteilhaft, bei dem bei einer entsprechenden Einstellung des Ventils die im Vorratsbehälter befindliche Gülle über das Leitungssystem durch die Pumpe umgepumpt wird, so dass die gesamte Gülle das Leitungssystem durchläuft und im Vorratsbehälter vollständig umgewälzt wird.

Die Erfindung wird mit Hilfe der Zeichnungen anhand von Ausführungsbeispielen im Folgenden noch näher erläutert.

Es zeigt
Figur 1 ein als Selbstfahrer ausgebildetes Güllefahrzeug;
Figur 2 ein als Anhänger ausgebildetes Güllefahrzeug;
Figur 3 eine Variante eines als Anhänger ausgebildeten Güllefahrzeugs;
Figur 4 ein Gülleanhänger mit einem einstellbaren Dreiwege-Ventil zur Regelung der Durchflussmenge;
Figur 5 ein Gülleanhänger mit einer einstellbaren Pumpe zur Regelung der Durchflussmenge und
Figur 6 ein Gespann aus Traktor und erfindungsgemäßem Gülleanhänger.

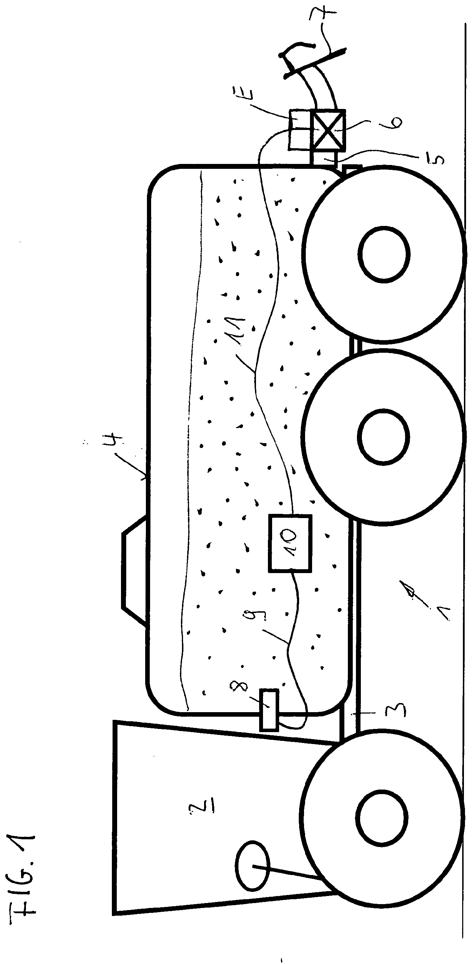

Figur 1 zeigt stark schematisiert ein Güllefahrzeug in der Seitenansicht. Mit dem Bezugszeichen 1 ist das gesamte Güllefahrzeug bezeichnet, welches eine Fahrerkabine 2 und ein Fahrgestell 3 aufweist. Ein Vorratsbehälter 4 nimmt den Vorrat an auszubringender Gülle G auf. Eine nicht näher bezeichnete Pumpe fördert mit Hilfe eines Leitungssystems 5 die auszubringende Gülle G über ein Ventil 6 zu einer Verteilervorrichtung 7, mittels der die Gülle G ausgebracht wird. Die Verteilervorrichtung 7 kann beliebiger Art sein. Eine Schleppschlauchvorrichtung - wie sie hier allerdings nicht dargestellt ist - kann vorteilhaft sein. Bei der symbolisch dargestellten Verteilervorrichtung, können Schleppschläuche vorgesehen sein, die bodennah enden, so dass auch in dieser Hinsicht die Ausbringung der Gülle G optimiert ist. Weitere Gülleverteiler wie Güllegrubber, Schlitzverteiler oder andere Bauformen, mit denen die Gülle in den Boden injiziert werden kann, sind mit Vorteilen einsetzbar.

Das Ventil 6 befindet sich an geeigneter Stelle im Leitungssystem 5 und kann als Mehrwegeventil ausgebildet sein. Im Vorratsbehälter 4 des Güllefahrzeugs 1 ist ein Sensor 8 angeordnet. Die Bauart des Sensors 8 ist an sich beliebig, er muss geeignet sein, die Gülle G zeitnah zur Ausbringung auf ihre Inhaltsstoffe hin zu analysieren.

Eine bevorzugte Bauart ist die eines optisch arbeitenden Sensors 8, der die Gülle G einer Spektralanalyse unterzieht. Die vom Sensor 8 gewonnenen Messdaten werden über Datenleitungen 9 einer Auswertevorrichtung 10 zugeführt, welche eine einstellbare Vorrichtung E in Form eines Ventils 6 auf Grund der Steuerdaten so ansteuert, dass die von der Verteilervorrichtung 7 auf den Boden ausgebrachte Güllemenge - bezogen auf ihre Inhaltsstoffe - möglichst exakt den vorgegebenen Inhaltsstoffen pro Flächeneinheit entspricht.

Es ist ersichtlich, dass auf diese Weise die vom Sensor 8 zeitnah zur Ausbringung gemessenen Inhaltsstoff-Anteile die Gülleausbringmenge bestimmen. Dazu werden die Messdaten in der Auswertevorrichtung 10 in Steuersignale für die Pumpe und /oder das Ventil 6 umgewandelt und die Ausbringmenge nach Maßgabe der Bedarfsgrößen gesteuert. Die Bedarfsgrößen können die Vorgaben des Gesetzgebers sein, oder aber Bedarfsdaten, die aus dem Nährstoffbedarf des Bodens allgemein oder dem Nährstoffbedarf von Pflanzen hergeleitet sind.

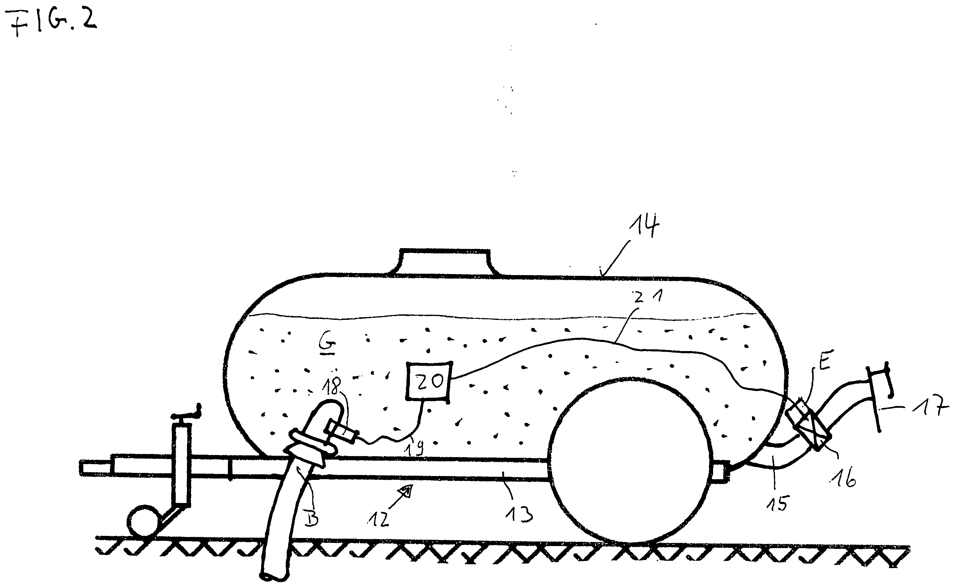

In Figur 2 ist in ähnlich schematischer Weise wie in Figur 1 ein Güllefahrzeug gezeigt, welches einen Gülleanhänger 12 darstellt. In analoger Weise zu dem Selbstfahrer 1 gemäß Figur 1 weist der Fahrzeuganhänger 12 ein Fahrgestell 13 auf. Ein Vorratsbehälter 14 nimmt den Vorrat an auszubringender Gülle G auf. Eine nicht näher bezeichnete Pumpe fördert mit Hilfe eines Leitungssystems 15 die auszubringende Gülle G über ein Ventil 16 zu einer Verteilervorrichtung 17, mittels der die Gülle G ausgebracht wird. Die Verteilervorrichtung 17 kann auch bei diesem Ausführungsbeispiel beliebiger Art sein. Das Ventil 16 befindet sich an geeigneter Stelle im Leitungssystem 15 und kann als Schieberventil ausgebildet sein. Im Befüllungsbereich B des Vorratsbehälters 14 des Güllefahrzeugs 12 ist ein Sensor 18 angeordnet. Die Bauart des Sensors 18 ist auch in diesem Ausführungsbeispiel wieder beliebig, er muss geeignet sein, die Gülle G zeitnah zur Ausbringung auf ihre Inhaltsstoffe hin zu analysieren. Eine bevorzugte Bauart ist die eines optisch arbeitenden Sensors 18, der die Gülle G einer Spektralanalyse unterzieht. Die vom Sensor 18 gewonnenen Messdaten werden über Datenleitungen 19 einer Auswertevorrichtung 20 zugeführt, welche mit Hilfe einer einstellbaren Vorrichtung E über weitere Datenleitungen 21 die Pumpe und/oder das Ventil 16 in Anhängigkeit vom Ergebnis der Analyse des Güllesensors 18 so ansteuert, dass die von der Verteilervorrichtung 17 auf den Boden ausgebrachte Güllemenge - bezogen auf ihre Inhaltsstoffe - möglichst exakt den vorgegebenen Inhaltsstoffen pro Flächeneinheit entspricht.

Bei dieser Ausführungsform, bei der der Sensor im Befüllungsbereich B des Vorratsbehälters 14 angeordnet ist, wird die Gülle während der Befüllung des Vorratsbehälters 14 analysiert. Dies kann bei der Befüllung aus einem stationären Behälter auf dem landwirtschaftlichen Anwesen oder aber auch auf dem Feld erfolgen, wenn die Befüllung durch Übertragen von einem größeren Zulieferfahrzeug auf ein kleineres Ausbringfahrzeug erfolgt. In beiden Fällen erfolgt die Analyse während der Befüllung und zeitnah zur anschließenden Ausbringung.

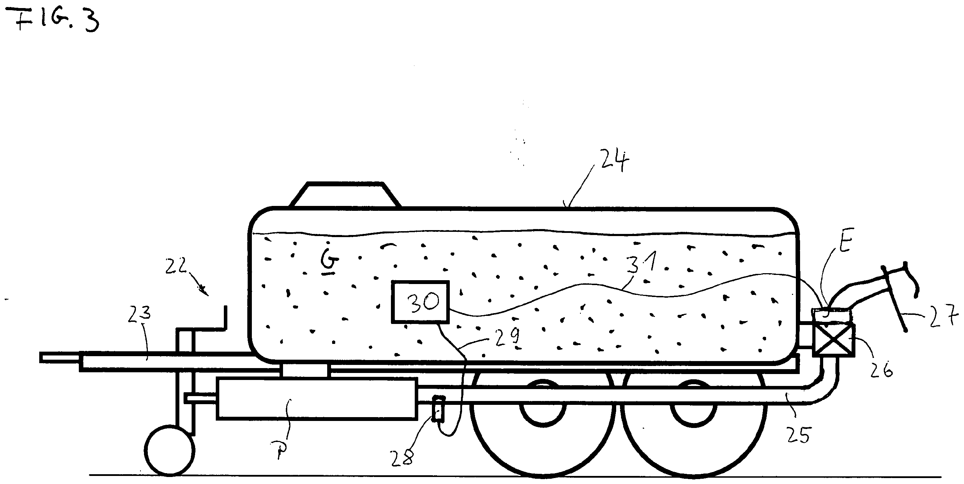

In Figur 3 ist ebenfalls schematisch eine andere Ausführungsform eines Gülleanhängers 22 dargestellt. Auch diese Bauform verfügt über ein Fahrgestell 23 und einen Vorratsbehälter 24 sowie über ein Leitungssystem 25 und ein Ventil 26, welches die Verteilervorrichtung 27 beaufschlagt. Ein Sensor 28 ist über Datenleitungen 29 mit einer Auswertevorrichtung 30 verbunden, welche über weitere Datenleitungen 31 mittels einer einstellbaren Vorrichtung E das Ventil 26 in Anhängigkeit vom Ergebnis der Analyse des Güllesensors 28 so ansteuert, dass die von der Verteilervorrichtung 27 auf den Boden ausgebrachte Güllemenge - bezogen auf ihre Inhaltsstoffe - möglichst exakt den vorgegebenen Inhaltsstoffen pro Flächeneinheit entspricht.

Abweichend von den vorbeschriebenen Bauformen ist bei diesem Ausführungsbeispiel eine Pumpe P dargestellt. Der Sensor 28 ist in einem Abschnitt des Leitungssystems 25 angeordnet, der sich zwischen dem Ventil 26 und Pumpe P befindet.

Bei einer entsprechenden Einstellung des Ventils 26 wird die im Vorratsbehälter 24 befindliche Gülle G über das Leitungssystem 25 durch die Pumpe P umgepumpt, dies wird in der Fachsprache auch mit "Umrühren" bezeichnet, da die gesamte Gülle das Leitungssystem 25 durchläuft und im Vorratsbehälter 24 vollständig umgewälzt wird.

Während dieses Umrührvorgangs wird die Gülle G von dem Sensor 28 analysiert, von der Auswertevorrichtung 30 ein Mittelwert gebildet und dieser mittels einer einstellbaren Vorrichtung E zur anschließenden Ansteuerung des Ventils 26 für die Ausbringung verwertet.

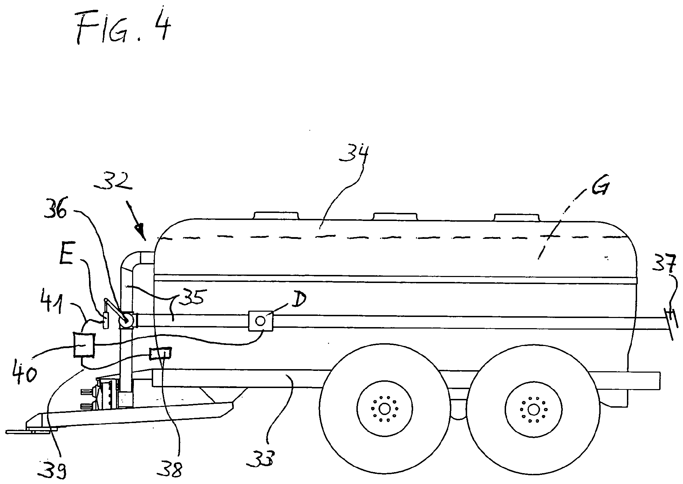

In Figur 4 ist eine weitere Variante eines Gülleanhängers veranschaulicht. Auch diese Bauform verfügt über ein Fahrgestell 33 und einen Vorratsbehälter 34 sowie über ein Leitungssystem 35 und ein Ventil 36, welches die Verteilervorrichtung 37 beaufschlagt. Ein Sensor 38 ist über Datenleitungen 39 mit einer Auswertevorrichtung 40 verbunden, welche über weitere Datenleitungen 41 mittels einer einstellbaren Vorrichtung E das Ventil 36 in Anhängigkeit vom Ergebnis der Analyse des Güllesensors 38 so ansteuert, dass die von der Verteilervorrichtung 37 auf den Boden ausgebrachte Güllemenge - bezogen auf ihre Inhaltsstoffe - möglichst exakt den vorgegebenen Inhaltsstoffen pro Flächeneinheit entspricht. Dazu ist die einstellbare Vorrichtung E als Ventil 36, bevorzugt als Dreiwegehahn ausgebildet, welches in Anhängigkeit vom Ergebnis der Analyse des Güllesensors 38 so ansteuert, dass die pro Flächeneinheit auszubringende Menge der Gülle G - bezogen auf ihre Inhaltsstoffe - entsprechend den Steuerdaten reguliert wird. Ein Durchfluss-Mengenmesser D, welcher im Leitungssystem 35 angeordnet ist, misst die geförderte Güllemenge G und stellt mittels einer einstellbaren Vorrichtung E das Dreiwegeventil 36 so ein, dass die von der Auswertevorrichtung 40 ermittelte Güllemenge - bezogen auf ihre Inhaltsstoffe - möglichst exakt den vorgegebenen Inhaltsstoffen pro Flächeneinheit entspricht und der Verteilervorrichtung 37 zur Ausbringung zugeführt wird. Das Dreiwegeventil 36 leitet die überschüssige Güllemenge nach Art eines Bypass in den Vorratsbehälter 34 zurück. Die Funktion eines Dreiwegeventils kann auch durch mehrere, z. B. zwei Absperrschieber realisiert sein.

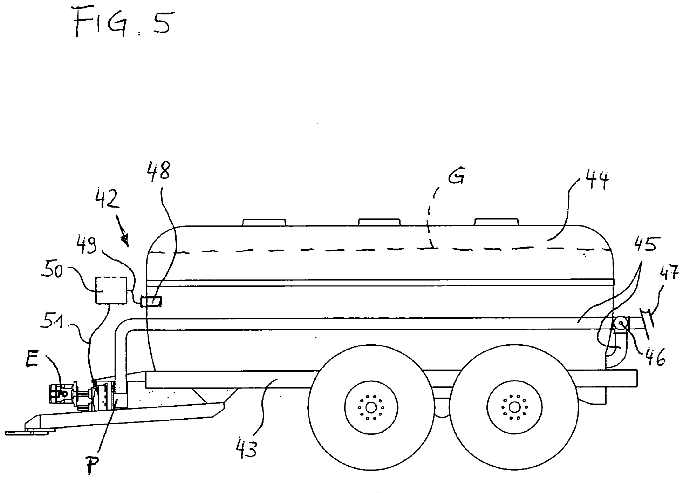

In Figur 5 ist eine weitere Variante eines Güllefahrzeugs 42 dargestellt. Auch diese Bauform verfügt über ein Fahrgestell 43 und einen Vorratsbehälter 44 sowie über ein Leitungssystem 45 und ein Ventil 46, welches die Verteilervorrichtung 47 beaufschlagt. Ein Sensor 48 ist über Datenleitungen 49 mit einer Auswertevorrichtung 50 verbunden, welche über weitere Datenleitungen 51 mittels einer einstellbaren Vorrichtung E in Form einer Pumpe P in Anhängigkeit vom Ergebnis der Analyse des Güllesensors 48 so ansteuert, dass die von der Verteilervorrichtung 47 auf den Boden ausgebrachte Güllemenge - bezogen auf ihre Inhaltsstoffe - möglichst exakt den vorgegebenen Inhaltsstoffen pro Flächeneinheit entspricht. Dazu ist die einstellbare Vorrichtung E als Drehzahl geregelte Pumpe P ausgebildet, welche in Anhängigkeit vom Ergebnis der Analyse des Güllesensors 48 so ansteuert, dass die pro Flächeneinheit auszubringende Menge der Gülle (G) - bezogen auf ihre Inhaltsstoffe - entsprechend den Steuerdaten reguliert wird. Die Förderleistung der Drehzahl geregelten Pumpe P ist als so genannte Schluckleistung in Liter pro Umdrehung bekannt, so dass über die Regelung der Drehzahl die geförderte Güllemenge G exakt bestimmbar ist.

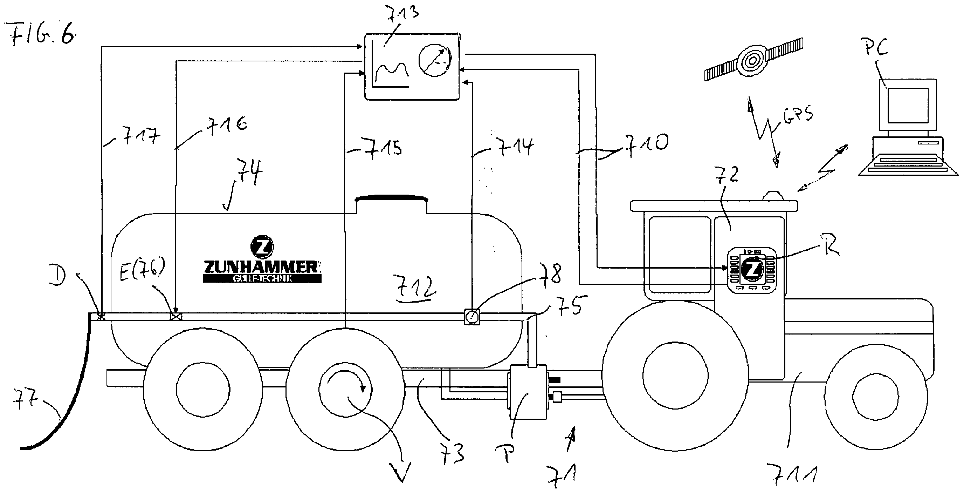

In Figur 6 ist ein Gespann 71 aus Traktor 711 und erfindungsgemäßem Gülleanhänger 712 veranschaulicht, welcher wenigstens über ein Fahrgestell 73 und einen Vorratsbehälter 74 verfügt. In einer Fahrerkabine 72 des Traktors 711 befindet sich ein Rechner R, welcher über Datenleitungen 710 in Form eines so genannten ISOBUS mit einer Auswertevorrichtung 713 verbunden ist. In der Auswertevorrichtung 713 werden die Einstellwerte für eine einstellbare Vorrichtung E generiert, welche im Leitungssystem 75 des Gülleanhängers 712 angeordnet ist. Die einstellbare Vorrichtung E kann durch ein Regelventil 76 realisiert sein, dessen Regeldaten über eine Datenleitung 716 von der Auswertevorrichtung 713 an das Regelventil 76 geliefert werden. Über weitere Datenleitungen 714 liefert ein Sensor 78 die zu analysierenden Daten der Gülleinhaltsstoffe an die Auswertevorrichtung 713. Der Sensor 78 befindet sich ebenfalls im Leitungssystem 75 des Gülleanhängers 712. Von einem Geschwindigkeitssensor V wird die Fahrgeschwindigkeit des Gespanns 71 ermittelt und über weitere Datenleitungen 715 an die Auswertevorrichtung 713 übertragen. In dem Leitungssystem 75 befindet sich ferner ein Durchfluss-Mengenmesser D, der über eine weitere Datenleitung 717 mit der Auswertevorrichtung 713 in Verbindung steht. Die gemessene Durchflussmenge wird so ermittelt und geht als weitere Regelgröße in die Datenverarbeitung der Auswertevorrichtung 713 ein. Am freien Ende des Leitungssystems 75 befindet sich die Verteilervorrichtung 77, mit welcher die errechnete korrekte Menge der Gülle ausgebracht wird.

Das Gespann 71 verfügt vorteilhafter Weise über ein so genanntes Global Positioning System, ein satellitengestütztes System zur weltweiten Positionsbestimmung (GPS). Mit Hilfe dieser Vorrichtung kann die Gülleausbringung vollständig und ortspezifisch dokumentiert werden. Die Übertragung der relevanten Ausbringdaten kann dementsprechend auch drahtlos zum Computer PC im Büro des Anwenders erfolgen, wo dieser eine so genannte Ackerschlagkartei erstellen kann.

Die in den vorstehenden Figurenbeschreibungen erwähnten Datenleitungen können in besonders vorteilhafter Weise als optische Datenleitungen, z.B. Glasfaserkabel ausgeführt sein.

Die beschriebenen Güllefahrzeuge ermöglichen eine Analyse der Gülle, zeitnah zu deren Ausbringung. Dadurch ist eine schnelle Regelung der Ausbringmenge möglich, weil während der Ausbringung bereits die Analyseergebnisse zur Regelung der Ausbringmenge vorliegen und anschließend nur noch die Arbeitsbreite und die Fahrgeschwindigkeit des Güllefahrzeugs die Ausbringmenge beeinflussen.

Die mechanische Belastung der zur Analyse erforderlichen Bausteine ist verhältnismäßig gering, da zum Teil vor der Ausbringung und nicht während der Fahrt gemessen und analysiert wird. Die Belastung durch Schwingungen und Rütteleffekte entfallen bei diesen Bauformen. Ferner treten bei Verstopfungen am Verteiler keinerlei Druckprobleme, beispielsweise durch Pulsation, am Sensor auf, die die Messungen beeinflussen könnten.

Darüber hinaus lässt sich der Temperatureinfluss bei einer zeitnahen Analyse verhältnismäßig leicht berücksichtigen.

Die Ermittlung von Durchschnittswerten für den gesamten Vorratsbehälter bei oder nach der Befüllung und/oder nach dem Umrühren ist einfach, aber vollständig ausreichend für eine Optimierung der Ausbringung.

In jedem Fall ist die zeitnahe Analyse zur Ausbringung gewährleistet und eine Verzögerung durch eine ausgelagerte Analyse im Labor wird vermieden.

Gegenüber einer Analyse der gesamten Gülle in einem stationären Güllesilo hat die erfindungsgemäße Analyse jeweils einer Füllung eines Güllefahrzeugs den Vorteil, dass eine große Anzahl von Teilanalysen für jeweils eine Tankladung eines Güllefahrzeugs vorliegt. Änderungen der Inhaltsstoffe durch Schwimm- oder Sinkschichten im Güllesilo werden in den einzelnen Tankladungen erfasst und berücksichtigt.

Über die abgehandelte Ermittlung und Berücksichtigung des Stickstoffgehalts von Gülle hinaus lassen sich auch andere Inhaltsstoffe wie Phosphor, Kali - um nur einige zu nennen - durch die Analyse bestimmen und auswerten. Die Auswertung kann zum Zwecke der Dokumentation erfolgen, welche Inhaltsstoffe sich in der Gülle befanden, es kann aber auch die Ausbringung der Gülle nach den anderen Inhaltsstoffen geregelt erfolgen.

### Bezugszeichenliste

- 1: Güllefahrzeug als Selbstfahrer ausgebildet
- 2: Fahrerkabine
- 3: Fahrgestell
- 4: Vorratsbehälter
- 5: Leitungssystem
- 6: Ventil
- 7: Verteilervorrichtung
- 8: Sensor
- 9: Datenleitung
- 10: Auswertevorrichtung
- 11: Datenleitung
- 12: Güllefahrzeug als Anhänger ausgebildet
- 13: Fahrgestell
- 14: Vorratsbehälter
- 15: Leitungssystem
- 16: Ventil
- 17: Verteilervorrichtung
- 18: Sensor
- 19: Datenleitung
- 20: Auswertevorrichtung
- 21: Datenleitung
- 22: Güllefahrzeug als Anhänger ausgebildet
- 23: Fahrgestell
- 24: Vorratsbehälter
- 25: Leitungssystem
- 26: Ventil
- 27: Verteilervorrichtung
- 28: Sensor
- 29: Datenleitung
- 30: Auswertevorrichtung
- 31: Datenleitung
- 32: Güllefahrzeug als Anhänger ausgebildet
- 33: Fahrgestell
- 34: Vorratsbehälter
- 35: Leitungssystem
- 36: Ventil
- 37: Verteilervorrichtung
- 38: Sensor
- 39: Datenleitung
- 40: Auswertevorrichtung
- 41: Datenleitung
- 42: Güllefahrzeug als Anhänger ausgebildet
- 43: Fahrgestell
- 44: Vorratsbehälter
- 45: Leitungssystem
- 46: Ventil
- 47: Verteilervorrichtung
- 48: Sensor
- 49: Datenleitung
- 50: Auswertevorrichtung
- 51: Datenleitung
- 71: Gespann
- 710: Datenleitung
- 711: Traktor
- 712: Gülleanhänger
- 713: Auswertevorrichtung
- 714: Datenleitung
- 715: Datenleitung
- 716: Datenleitung
- 717: Datenleitung
- 72: Fahrerkabine
- 73: Fahrgestell
- 74: Vorratsbehälter
- 75: Leitungssystem
- 76: Regelventil
- 77: Verteilervorrichtung
- 78: Sensor

- B: Befüllungsbereich
- D: Durchfluss-Mengenmesser
- E: einstellbare Vorrichtung
- G: Gülle
- GPS: Global Positioning System
- P: Pumpe
- PC: Bürocomputer
- R: Rechner
- V: Geschwindigkeitssensor

## Patentansprüche

1. Güllefahrzeug (12) mit einem Vorratsbehälter (14) und wenigstens einer Verteilervorrichtung (17), die mit dem Vorratsbehälter (14) mittels einem Leitungssystem (15) verbunden ist, sowie mit wenigstens einem Sensor (18) zum Messen der Inhaltsstoffe der auszubringenden Gülle (G), und mit einer Auswertevorrichtung (20), welche Steuerdaten erzeugt, die durch den Vergleich der vom Sensor (18) gemessenen Inhaltsstoff-Ist-Daten der Gülle (G) mit vorgebbaren Inhaltsstoff-Daten berechnet werden, **dadurch gekennzeichnet, dass** der Sensor (18) im Befüllungsbereich (B) des Vorratsbehälters (14) angeordnet ist, und dass die Verteilervorrichtung (17) von einer einstellbaren Vorrichtung (E, 16) auf Grund der Steuerdaten so angesteuert wird, dass die pro Flächeneinheit auszubringende Menge der Gülle (G) - bezogen auf ihre Inhaltsstoffe entsprechend den Steuerdaten reguliert wird.

2. Güllefahrzeug (1)mit einem Vorratsbehälter (4) und wenigstens einer Verteilervorrichtung (7); die mit dem Vorratsbehälter (4) mittels einem Leitungssystem (5) verbunden ist, sowie mit wenigstens einem Sensor (8) zum Messen der Inhaltsstoffe der auszubringenden Gülle (G), und mit einer Auswertevorrichtung (10), welche Steuerdaten erzeugt, die durch den Vergleich der vom Sensor (8) gemessenen Inhaltsstoff-Ist-Daten der Gülle (G) mit vorgebbaren Inhaltsstoff-Daten berechnet werden, **dadurch gekennzeichnet, dass** der Sensor (8) im Vorratsbehälter (4) angeordnet ist, und dass die Verteilervorrichtung (7) von einer einstellbaren Vorrichtung (E, 6) auf Grund der Steuerdaten so angesteuert wird, dass die pro Flächeneinheit auszubringende Menge der Gülle (G) - bezogen auf ihre Inhaltsstoffe - entsprechend den Steuerdaten reguliert wird.

3. Güllefahrzeug (22) mit einem Vorratsbehälter (24) und wenigstens einer Verteilervorrichtung (27), die mit dem Vorratsbehälter(24) mittels einem Leitungssystem (25) verbunden ist, sowie mit wenigstens einem Sensor (28) zum Messen der Inhaltsstoffe der auszubringenden Gülle (G), und mit einer Auswertevorrichtung (30), welche Steuerdaten erzeugt, die durch den Vergleich der vom Sensor (28) gemessenen Inhaltsstoff-Ist-Daten der Gülle (G) mit vorgebbaren Inhaltsstoff-Daten berechnet werden, **dadurch gekennzeichnet, dass** der Sensor (28) in einem die Gülle (G) umrührenden Leitungssystem (25) zwischen dem Befüllungsbereich (B) und der Verteilervorrichtung (27) angeordnet ist, und dass die Verteilervorrichtung (27) von feiner einstellbaren Vorrichtung (E, 26) auf Grund der Steuerdaten so angesteuert wird, dass die pro Flächeneinheit auszubringende Menge der Gülle (G) - bezogen auf ihre Inhaltsstoffe - entsprechend den Steuerdaten reguliert wird.

4. Güllefahrzeug nach einem der vorstehenden Ansprüche, **dadurch gekennzeichnet, dass** die einstellbare Vorrichtung von einer drehzahlgeregelten Pumpe (P) gebildet ist, welche in dem Leitungssystem angeordnet ist.

5. Güllefahrzeug nach einem der vorstehenden Ansprüche, **dadurch gekennzeichnet, dass** die einstellbare Vorrichtung von einem Dreiwegeventil (6, 16, 26) gebildet ist, welches in dem Leitungssystem (5, 15, 25) angeordnet ist.

6. Güllefahrzeug nach einem der vorstehenden Ansprüche, **dadurch gekennzeichnet, dass** die Verteilervorrichtung (7, 17, 27, 37, 47) als Schleppschlauch-Verteiler, Grubber oder Injektor ausgebildet ist.

7. Güllefahrzeug nach einem der vorstehenden Ansprüche, **dadurch gekennzeichnet, dass** es als so genannter Selbstfahrer (1) ausgebildet ist.

8. Güllefahrzeug nach einem der vorstehenden Ansprüche, **dadurch gekennzeichnet, dass** es als Anhänger (12, 22, 32) ausgebildet ist.

9. Güllefahrzeug nach einem der vorstehenden Ansprüche, **dadurch gekennzeichnet, dass** der Sensor (8, 18, 28, 38, 48) als spektralanalytisch arbeitender Sensor ausgebildet ist.

10. Güllefahrzeug nach einem der vorstehenden Ansprüche, **dadurch gekennzeichnet, dass** der Sensor (8, 18, 28, 38, 48) über eine optische Datenleitung mit der Auswertevorrichtung (10) verbunden ist.

11. Güllefahrzeug nach einem der vorstehenden Ansprüche, **dadurch gekennzeichnet, dass** im Leitungssystem (5, 15, 25, 35, 45, 55, 75) ein Durchfluss-Mengenmesser (D) angeordnet ist.

12. Verfahren zum Umrühren von Gülle (G) in einem Güllefahrzeug (1, 12, 22) nach Anspruch 3 oder 4-11 wenn abhängig von Anspruch 3, bei dem bei einer entsprechenden Einstellung des Ventils die im Vorratsbehälter befindliche Gülle (G) über das Leitungssystem durch die Pumpe (P) umgepumpt wird, so dass die gesamte Gülle (G) das Leitungssystem durchläuft und im Vorratsbehälter vollständig umgewälzt wird.

## Claims

1. Liquid manure dispensing vehicle (12) having a storage container (14) and at least one distributor device (17) which is connected to the storage container (14) by means of a line system (15), and having at least one sensor (18) for measuring the content substances of the liquid manure (G) to be dispensed, and having an evaluation device (20) which generates control data which is calculated by comparing the content substance actual data of the liquid manure (G), measured by the sensor (18), with predefinable content substance data, **characterized in that** the sensor (18) is arranged in the filling region (B) of the storage container (14), and **in that** the distributor device (17) is actuated by an adjustable device (E, 16) on the basis of the control data in such a way that the quantity of liquid manure (G) which is to be dispensed per unit surface area is regulated, with respect to its content substances, in accordance with the control data.

2. Liquid manure dispensing vehicle (1) having a storage container (4) and at least one distributor device (7) which is connected to the storage container (4) by means of a line system (5), and having at least one sensor (8) for measuring the content substances of the liquid manure (G) to be dispensed, and having an evaluation device (10) which generates control data which is calculated by comparing the content substance actual data of the liquid manure (G), measured by the sensor (8), with predefinable content substance data, **characterized in that** the sensor (8) is arranged in the storage container (4), and **in that** the distributor device (7) is actuated by an adjustable device (E, 6) on the basis of the control data in such a way that the quantity of liquid manure (G) to be dispensed per unit surface area is regulated, with respect to its content substances, in accordance with the control data.

3. Liquid manure dispensing vehicle (22) having a storage container (24) and at least one distributor device (27) which is connected to the storage container (24) by means of a line system (25), and having at least one sensor (28) for measuring the content substances of the liquid manure (G) to be dispensed, and having an evaluation device (30) which generates control data which is calculated by comparing the content substance actual data of the liquid manure (G), measured by the sensor (28), with predefinable content substance data, **characterized in that** the sensor (28) is arranged in a line system (25), which agitates the liquid manure (G), between the filling region (B) and the distributor device (27), and **in that** the distributor device (27) is actuated by an adjustable device (E, 26) on the basis of the control data in such a way that the quantity of liquid manure (G) to be dispensed per unit surface area is regulated, with respect to its content substances, in accordance with the control data.

4. Liquid manure dispensing vehicle according to one of the preceding claims, **characterized in that** the adjustable device is formed by a rotational-speed-regulated pump (P) which is arranged in the line system.

5. Liquid manure dispensing vehicle according to one of the preceding claims, **characterized in that** the adjustable device is formed by a three-way valve (6, 16, 26) which is arranged in the line system (5, 15, 25).

6. Liquid manure dispensing vehicle according to one of the preceding claims, **characterized in that** the distributor device (7, 17, 27, 37, 47) is embodied as a drag hose distributor, cultivator or injector.

7. Liquid manure dispensing vehicle according to one of the preceding claims, **characterized in that** said vehicle is embodied as what is referred to as a self-propelled vehicle (1).

8. Liquid manure dispensing vehicle according to one of the preceding claims, **characterized in that** said vehicle is embodied as a trailer (12, 22, 32).

9. Liquid manure dispensing vehicle according to one of the preceding claims, **characterized in that** the sensor (8, 18, 28, 38, 48) is embodied as a sensor which operates with spectral analysis.

10. Liquid manure dispensing vehicle according to one of the preceding claims, **characterized in that** the sensor (8, 18, 28, 38, 48) is connected to the evaluation device (10) via an optical data line.

11. Liquid manure dispensing vehicle according to one of the preceding claims, **characterized in that** a throughflow quantity meter (D) is arranged in the line system (5, 15, 25, 35, 45, 55, 75).

12. Method for agitating liquid manure (G) in a liquid manure dispensing vehicle (1, 12, 22) according to Claim 3 or Claims 4-11 if dependent on claim 3, in which given a corresponding setting of the valve the liquid manure (G) which is located in the storage container is pumped around via the line system by means of the pump (P) so that the entire liquid manure (G) passes through the line system and is recirculated completely in the storage container.

## Revendications

1. Véhicule à lisier (12) comprenant un réservoir (14) et au moins un dispositif de distribution (17) qui est relié au réservoir (14) au moyen d'un système de conduites (15), et comprenant au moins un capteur (18) destiné à mesurer les ingrédients du lisier (G) à épandre, et comprenant un dispositif d'interprétation (20) qui génère des données de commande, lesquelles sont calculées par la comparaison des données réelles des ingrédients du lisier (G) mesurées par le capteur (18) avec des données d'ingrédients pouvant être prédéfinies, **caractérisé en ce que** le capteur (18) est disposé dans la zone de remplissage (B) du réservoir (14) et **en ce que** le dispositif de distribution (17) est commandé par un dispositif réglable (E, 16) sur la base des données de commande de telle sorte que la quantité de lisier (G) à épandre par unité de surface, rapportée à ses ingrédients, est régulée conformément aux données de commande.

2. Véhicule à lisier (1) comprenant un réservoir (4) et au moins un dispositif de distribution (7) qui est relié au réservoir (4) au moyen d'un système de conduites (5), et comprenant au moins un capteur (8) destiné à mesurer les ingrédients du lisier (G) à épandre, et comprenant un dispositif d'interprétation (10) qui génère des données de commande, lesquelles sont calculées par la comparaison des données réelles des ingrédients du lisier (G) mesurées par le capteur (8) avec des données d'ingrédients pouvant être prédéfinies, **caractérisé en ce que** le capteur (8) est disposé dans le réservoir (4) et **en ce que** le dispositif de distribution (7) est commandé par un dispositif réglable (E, 6) sur la base des données de commande de telle sorte que la quantité de lisier (G) à épandre par unité de surface, rapportée à ses ingrédients, est régulée conformément aux données de commande.

3. Véhicule à lisier (22) comprenant un réservoir (24) et au moins un dispositif de distribution (27) qui est relié au réservoir (24) au moyen d'un système de conduites (25), et comprenant au moins un capteur (28) destiné à mesurer les ingrédients du lisier (G) à épandre, et comprenant un dispositif d'interprétation (30) qui génère des données de commande, lesquelles sont calculées par la comparaison des données réelles des ingrédients du lisier (G) mesurées par le capteur (28) avec des données d'ingrédients pouvant être prédéfinies, **caractérisé en ce que** le capteur (28) est disposé dans un système de conduites (25) qui agite le lisier (G) entre la zone de remplissage (B) et le dispositif de distribution (27), et **en ce que** le dispositif de distribution (27) est commandé par un dispositif réglable (E, 26) sur la base des données de commande de telle sorte que la quantité de lisier (G) à épandre par unité de surface, rapportée à ses ingrédients, est régulée conformément aux données de commande.

4. Véhicule à lisier selon l'une des revendications précédentes, **caractérisé en ce que** le dispositif réglable est formé par une pompe à régulation de vitesse (P) qui est disposée dans le système de conduites.

5. Véhicule à lisier selon l'une des revendications précédentes, **caractérisé en ce que** le dispositif réglable est formé par une vanne à trois voies (6, 16, 26) qui est disposée dans le système de conduites (5, 15, 25).

6. Véhicule à lisier selon l'une des revendications précédentes, **caractérisé en ce que** le dispositif de distribution (7, 17, 27, 37, 47) est réalisé sous la forme d'un distributeur à tuyau remorqué, d'un cultivateur ou d'un injecteur.

7. Véhicule à lisier selon l'une des revendications précédentes, **caractérisé en ce qu'**il est réalisé sous la forme d'un véhicule dit automoteur (1).

8. Véhicule à lisier selon l'une des revendications précédentes, **caractérisé en ce qu'**il est réalisé sous la forme d'une remorque (12, 22, 32).

9. Véhicule à lisier selon l'une des revendications précédentes, **caractérisé en ce que** le capteur (8, 18, 28, 38, 48) est réalisé sous la forme d'un capteur fonctionnant par analyse du spectre.

10. Véhicule à lisier selon l'une des revendications précédentes, **caractérisé en ce que** le capteur (8, 18, 28, 38, 48) est relié au dispositif d'interprétation (10) par le biais d'une ligne de données optique.

11. Véhicule à lisier selon l'une des revendications précédentes, **caractérisé en ce qu'**un débitmètre volumique (D) est disposé dans le système de conduites (5, 15, 25, 35, 45, 55).

12. Procédé pour agiter du lisier (G) dans un véhicule à lisier (1, 12, 22) selon la revendication 3 ou les revendications 4 à 11 si elles sont dépendantes de la revendication 3, procédé selon lequel, avec un réglage en conséquence de la vanne, le lisier (G) qui se trouve dans le réservoir est mis en circulation par pompage par la pompe (P) par le biais du système de conduites, de sorte que la totalité du lisier (G) traverse le système de conduites et est entièrement remis en circulation dans le réservoir.
